Europäisches Patentamt

European Patent Office

Office européen des brevets

(11) Veröffentlichungsnummer: **0 101 748**
A1

# (12) EUROPÄISCHE PATENTANMELDUNG

(21) Anmeldenummer: 82107127.1

(22) Anmeldetag: 06.08.82

(51) Int. Cl.³: **B 01 D 45/12**
F 23 J 3/04, B 04 C 7/00

(43) Veröffentlichungstag der Anmeldung:
07.03.84 Patentblatt 84/10

(84) Benannte Vertragsstaaten:
AT BE CH DE FR GB IT LI NL SE

(71) Anmelder: Ruhrkohle-Carborat GmbH
Windmühlenweg
D-4152 Kempen 3 / Tönisberg(DE)

(72) Erfinder: Lüttger, Hans
Werdener Strasse 63
D-4200 Oberhausen 1(DE)

(54) Entstaubung für Feuerungsanlagen.

(57) Bei allen bekannten Fliehkraftentstaubern bestehen teilweise Schwierigkeiten, die Entstaubungsleistung zeitgemäßen Anforderungen anzupassen. Das gilt insbesondere für Kleinfeuerungsanlagen mit einer Leistung zwischen 0,5 und 10 Gcal/h und dazugehörenden Entstaubern. Nach der Erfindung wird eine wesentliche Steigerung der Entstaubungsleistung an Fliehkraftentstaubern dadurch erreicht, daß Kaltgas und/oder Rauchgas als Drallmittel eingesetzt wird. Dabei läßt sich nicht nur in weiten Grenzen jede gewünschte Drallbewegung erzeugen, sondern tritt infolge der Gasbeimischung eine Rauchgasabkühlung ein, die die Entstaubung erheblich fördert. Das wird auf eine verringerte Zähigkeit der Rauchgase zurückgeführt.

EP 0 101 748 A1

Entstaubung für Feuerungsanlagen

Bei Großfeuerungsanlagen wird es seit langem als notwendige Voraussetzung angesehen, daß den Feuerungsanlagen eine Entstaubung nachgeschaltet ist. Die gebräuchlichsten Filter sind Elektrofilter, Gewebefilter, Naßwäschen und darüber hinaus mechanische Vielzellenfilter. Bei kleineren Anlagen zwischen 0,5 und 10 Gcal/h scheiden Elektrofilter aus Kosten- und Platzgründen aus. Gewebefilter haben zu kurze Standzeiten und bei Naßabscheidern besteht eine Korrosions- und Versottungsgefahr für nachgeschaltete Aggregate.

Mechanische Vielzellenentstauber erfüllen an sich am ehesten die Anforderungen für derartige Anlagengrößen. Derartige Entstauber sind beispielsweise aus der DT-OS 21 50 733 bekannt. Dabei handelt es sich um eine Anzahl kleiner Zyklone mit einem nach außen verlagerten tangentialen Rohgaseintritt. Dadurch, daß der Rohgaseintritt der verschiedenen Zyklone bzw. die verschiedenen Zyklone neben- und übereinander im Filtergehäuse angeordnet sind, können die Zyklone frei und gleichmäßig angeströmt werden. Es entstehen relativ niedrige Strömungsgeschwindigkeiten und so geringe Strömungswiderstände, daß nur ein geringer Druckverlust insgesamt auftritt. Eingangs- und Ausgangsquerschnitt des Rohgas- bzw. Reingaskanales sowie die Kanäle selbst sind so dimensioniert, daß annähernd an jeder Stelle gleichgroße Geschwindigkeiten erzielt werden. Gleichzeitig verhindert diese Dimensionierung eine unerwünschte Bunkerrücksaugung des Staubes durch einzelne Zyklone.

Die Entstaubungsleistung von mechanischen Entstaubern muß wie die Leistung aller anderen Entstauber eine bestimmte Mindestgröße erreichen. Die Entstaubungsleistung wird bemessen nach der Staubkonzentration im Abgas. Dieser Wert bezieht sich bei der Verbrennung von Kohle auf einen bestimmten $CO_2$-Gehalt im Rauchgas. Maßgebend ist dabei für den Emissionsgrenzwert das trockene Rauchgas; d. h. der im Abgas enthaltene Wasserdampf (bei der Verfeuerung von Steinkohlen rd. 5 %) ist in Abzug zu bringen.

...

Für feingemahlenen Anthrazitkohlenstaub und dgl. Kohlenstäube soll die Entstaubungsleistung einer zeitgemäßen Entstaubungsanlage eine Staubkonzentration 150 mg/Nm$^3$, bezogen auf 12 % Kohlendioxydgehalt, erreichen.

Bei den bekannten Vielzellenentstaubern nach der DT-OS 21 50 733 bestehen Schwierigkeiten, diese Entstaubungsleistung immer sicherzustellen.

Der Erfindung liegt deshalb die Aufgabe zugrunde, insbesondere für Feuerungsanlagen mit einer Leistung zwischen 0,5 und 10 Gcal/h, bei der Verwendung von feingemahlener Anthrazitsteinkohle als Einsatzbrennstoff eine zeitgemäße Entstaubung sicherzustellen, deren Anschaffungs- und Wartungskosten im Bereich eines mechanischen Vielzellenentstaubers liegen.

Nach der Erfindung wird das durch eine Fliehkraftentstaubung der Rauchgase mit Kaltgas und/oder Rauchgas erreicht, das tangential in den Rauchgasstrom eintritt. Als Kaltgas kann Luft verwendet werden. Das in den Rauchgasstrom eintretende Gas bewirkt eine Drallbewegung der Rauchgasströmung, die eine Fliehkraftentstaubung zur Folge hat. D. h. die im Rauchgasstrom mitgeführten Staubpartikel werden infolge der auf Gaspartikel und Staubpartikel unterschiedlich wirkenden Fliehkräfte radial nach außen bewegt, so daß in der Strömungsmitte sauberes Rauchgas anfällt, während sich der Staub am äußeren Rand der Strömung konzentriert. Wie bei üblicher Fliehkraftentstaubung läßt sich dann das saubere Rauchgas mit Hilfe entsprechender Strömungsteiler aus der Strömungsmitte abziehen, während das Staubkonzentrat dem Staubbunker zugeführt wird.

Über die erwartete mechanische Wirkung der Fliehkraftentstaubung hinaus zeigt sich ein die Entstaubung stark begünstigender Effekt durch die mit der Beimischung von Kaltgasen verbundene Rauchgasabkühlung. Das wird auf eine verringerte Zähigkeit der Rauchgase zurückgeführt.

Als Kaltgas wird wahlweise Luft oder Reingas verwendet, wobei das Reingas in einem für den gewünschten Abkühlungseffekt ausreichenden Abstand von der Fliehkraftentstaubung aus dem Reingas/Abgasstrom abgezogen wird.

Von besonderem Vorteil ist die erfindungsgemäße Fliehkraftentstaubung mit Kaltgas und/oder Reingas in Kombination mit einer üblichen Fliehkraftentstaubung, bei denen dem Rauchgas mit mechanischen Hilfsmitteln eine Drehbewegung aufgezwungen wird. Mechanische Hilfsmittel sind beispielsweise Drallschaufeln und Zyklone in verschiedenen Bauarten. Die Drallschaufeln werden in beliebiger Weise im Rauchgasstrom derart angeordnet, daß sie das Rauchgas in geeigneter Weise umlenken. Bei den Zyklonen handelt es sich um im wesentlichen zylindrische Behälter, die einen besonderen Rauchgaseintritt aufweisen. Der besondere Rauchgaseintritt ist beispiels-weise als zum zylinderförmigen Zyklonbehälter tangentiale Rauchgaszufüh-rung ausgebildet. Desgleichen sind schnecken- oder spiralförmige Zuführungen für Zyklone bekannt.

In Kombination mit einer an sich bekannten Fliehkraftentstaubung ist die erfindungsgemäße Fliehkraftentstaubung der bekannten Entstaubung nachgeordnet. Nach der Erfindung entsteht dadurch eine zweistufige Fliehkraftentstaubung. In der ersten Stufe werden die Grobpartikel und in der zweiten Stufe die Feinpartikel ausgeschieden. Vorteilhafterweise wird dabei die Drallbewegung des Rauchgases aus der ersten Fliehkraftentstaubung ge-nutzt, indem die erfindungsgemäße Kaltgas- und/oder Reingaszuführung möglichst unmittelbar nach dem Ausscheiden eines wesentlichen Grobpartikel-anteiles einsetzt. Infolgedessen bewirkt das eintretende Kaltgas und/oder Reingas eine erhebliche Beschleunigung des sich bereits in Drallbewegung befindlichen Rauchgases. Die resultierende Drehgeschwindigkeit bewirkt so starke Fliehkräfte, daß auch die Feinststaubpartikel aus dem Rauchgasstrom ausgeschieden werden.

In Kombination mit einer an sich bekannten Fliehkraftentstaubung ist die zweistufige Entstaubung mit der erfindungsgemäßen Fliehkraftentstaubung mittels Zuführung von Gas auch dann von besonderem Vorteil, wenn bei-spielsweise Reingas ohne nennenswertes Temperaturgefälle gegenüber noch staubbeladenem Rauchgas verwendet wird.

Ein weiterer Vorteil der erfindungsgemäßen zweistufigen Entstaubung er-gibt sich gebläseseitig; denn es entsteht aus der Druckwirkung der Kalt-gas- und/oder Reingaszuführung eine Entlastung des Saugvorganges.

- 4 -

0101748

Die erfindungsgemäße Rauchgasentstaubung eignet sich außerdem zu einer dreistufigen Entstaubung, wobei als 3. Stufe insbesondere eine der Fliehkraftentstaubung mit Kaltgas und/oder Reingas und der an sich bekannten Fliehkraftentstaubung vorgeschaltete Entstaubung durch Umlenkung des Rauchgasstromes vorgesehen ist. Die Umlenkung bildet dann die erste Entstaubungsstufe für die größten Staubpartikel.

Vor allem die Verwendung von Luft für die erfindungsgemäße Fliehkraftentstaubung mit Gas als Drallmittel eröffnet im Falle einer Feuerungsanlage mit Brennstoffeindüsung, d. h. einer Kohlenstaubfeuerung, die Möglichkeit einer Vorwärmung der Trägerluft für den Kohlenstaub. Nach der Erfindung wird das als Drallmittel dienende Gas dazu vorzugsweise in den Randbereich des sich in Drehbewegung befindlichen Rauchgasstromes eingedüst. Ein wesentlicher Teil des eingedüsten Gases tritt dann mit den aus dem Rauchgas abgeschiedenen Staubpartikeln in den Bunker. Aus dem Bunker wird die eingedüste Gasmenge ganz oder teilweise abgesaugt und bildet ausschließlich oder teilweise das Trägergasmedium zum Eindüsen des Kohlenstaubes. Dabei weist das Trägergasmedium entsprechend der Temperatur, die die aus dem Bunker abgesaugte Luft nach der Eindüsung auf dem Wege zum Bunker und im Bunker erreicht, je nach Auslegung des Entstaubers und der Kohlenstaubeindüsung eine Erwärmung auf, die eine Kohlenstaubvorwärmung bis max. 200 $^{o}$C ohne gleichzeitige Gefahr der Selbstentzündung bewirkt.

In weiterer Ausbildung der Erfindung ist als Bauform für den erfindungsgemäßen Fliehkraftentstauber mit Gas als Drallmittel ein senkrecht stehender, oben und unten offener und an sich aus der Zyklonentstaubung bekannter Behälter mit einer Querschnittsverringerung an der Gasaustrittsöffnung vorgesehen. Die Querschnittsverringerung wird vorzugsweise durch ein Tauchrohr gebildet, das von oben in den Behälter ragt und zu einer besseren Trennung des Reingases von den sich an der inneren Mantelfläche des Behälters sammelnden Staubpartikeln beiträgt. Das als Drallmittel dienende Reingas bzw. Kaltgas wird mit mindestens einer in den Behälter gerichteten Düse eingedüst. Die Düse kann in ähnlicher Weise wie ein Zykloneintritt verlaufen, d. h. tangential oder auf schneckenförmiger Bahn oder auf spiralförmiger Bahn. Besonders vorteilhaft ist eine spiralförmig nach unten gerichtete Bahn, da das im Falle der Bunkerabsaugung von Luft den Eintritt der als Drallmittel verwendeten Luft in den Bunker begünstigt. Nach der Erfindung liegt der Neigungswinkel der spiralförmigen Bahn vorzugsweise zwischen 25 und 35$^{o}$.

Je nach Ausbildung der Düse ist der eintretende Gasstrahl scharf gebündelt oder als Breitstrahl ausgelegt. Der Breitstrahl vergrößert den Entstauberbereich für die Feinstpartikel. Die gleiche Wirkung läßt sich mit übereinander angeordneten Düsen runden Querschnitts erreichen.

Der Entstaubungsbereich für die Feinstentstaubung mit Gas als Drallmittel hat in Behälterlängsrichtung vorzugsweise eine Breite zwischen 250 und 500 mm. Dabei beträgt der Abstand von Düsen runden Querschnitts in Behälterlängsrichtung zwischen 75 und 150 mm. Der Durchmesser derartiger Düsen liegt zwischen 5 und 10 mm.

Im Unterschied zu herkömmlichen Zyklonbehältern ist der erfindungsgemäße Entstaubungsbehälter für die Fliehkraftentstaubung mit Gas als Drallmittel am unteren Ende gleichbleibend zylindrisch, so daß sich eine einfache Konstruktion ergibt. Diese Konstruktion besteht beispielsweise aus einem abgelängten Rohr entsprechenden Durchmessers, das am oberen Ende mit einem Deckel versehen ist, der eine zentrische Öffnung mit einem das Tauchrohr bildenden, nach innen in den Behälter ragenden Kragen aufweist.

In Kombination des erfindungsgemäßen Fliehkraftentstaubers mit Gas als Drallmittel mit einem an sich bekannten mechanischen Fliehkraftentstauber ist in weiterer Ausbildung der Erfindung vorgesehen, daß das Gehäuse des mechanischen Fliehkraftentstaubers gleichfalls rohrförmig ausgebildet ist. Der mechanische Fliehkraftentstauber ist dann unter dem rohrförmigen Behälter des Fliehkraftentstaubers mit Gas als Drallmittel angeordnet, so daß das aus dem an sich bekannten mechanischen Fliehkraftentstauber austretende Rauchgas von unten in den rohrförmigen Behälter des Fliehkraftentstaubers mit Gas als Drallmittel eintritt. Im Unterschied zu herkömmlichen Fliehkraftentstaubern ist der rohrförmige Behälter des an sich bekannten mechanischen Fliehkraftentstaubers dann vorzugsweise nicht mit einer Einschnürung am oberen Ende versehen, sondern oben offen ausgebildet, so daß der in Drehung versetzte Rauchgasstrom ungehindert in das untere Ende des Fliehkraftentstaubers mit Luft als Drallmittel eintreten kann. Gemäß dieser Überlegung sind die Durchmesser der übereinander angeordneten Behälter des an sich bekannten mechanischen Fliehkraftentstaubers und des Fliehkraftentstaubers mit Luft als Drallmittel gleich oder annähernd gleich gewählt. Zwischen beiden Behältern ist vorzugsweise ein Abstand vorgesehen, der insbesondere bei Verwendung von Luft als Drallmittel in dem oberen Behälter der Luft Gelegenheit gibt, nach dem Austritt aus dem oberen Behälter außen am unteren Behälter vorbei in den Bunker zu strömen. Auf diesem Wege wird die Luft von einem beide rohrförmigen Behälter umschließenden Mantel geführt. Der Mantel ist gleichfalls rohrförmig ausgebildet, so daß eine Entstaubereinheit aus im wesentlichen drei Rohren besteht, von denen zwei in Längsrichtung fluchtend im Dritten angeordnet sind.

Das rohrförmige Gehäuse des unteren Fliehkraftentstaubers der Entstaubungseinheit ist im Unterschied zu herkömmlichen mechanischen Fliehkraftentstaubern vorzugsweise von einheitlichem Durchmesser. Das gilt auch für das untere Ende, an dem herkömmliche Fliehkraftentstauber eine trichterförmige Verjüngung besitzen. Das vereinfacht die Konstruktion und ermöglicht darüber hinaus eine montage- und wartungsfreundliche Anordnung der Drallmechanik für den unteren Fliehkraftentstauber der Entstaubungseinheit. Die Drallmechanik besitzt eine Vielzahl von Drallschaufeln, die gleichmäßig verteilt auf einen Kreisumfang angeordnet sind, dessen Durchmesser so gewählt ist, daß die aus den Drallschaufeln austretenden Rauchgase einen ausreichenden Abstand zwischen den Drallschaufeln und dem umgebenden Rohrmantel des unteren Fliehkraftentstaubers finden, um zum oberen Fliehkraftentstauber hin entweichen zu können. Die Drallschaufeln werden zentrisch von innen angeströmt; d. h. in den Rohrmantel des unteren Fliehkraftentstaubers führt eine Rohrleitung zu den zentrisch angeordneten Drallschaufeln. Der Durchmesser der zu den Drallschaufeln führenden Rohrleitung ist so groß, daß er im wesentlichen dem Durchmesser des Kreisumfanges entspricht, auf dem die Drallschaufeln angeordnet sind. Vorzugsweise schließen sich die Drallschaufeln derart an das rauchgaszuführende Rohr, daß der Rohrinnenmantel stufenlos in den Mantel übergeht, auf dem die anströmseitigen Stirnflächen der Drallschaufel liegen.

Nach der Erfindung liegt dem rauchgaszuführenden Rohr an der in Rohrlängsrichtung abgewandten Drallschaufelfläche ein Verdrängungskonus gegenüber, der gleich einem Deckel die zugehörige Seite verschließt und in den zylindrischen Innenraum der Drallschaufeln hineinragt. Das zwingt das Rauchgas zu einer günstigen gleichmäßigen Verteilung auf alle Drallschaufeln.

Zu dem in Strömungsrichtung des aus den Drallschaufeln austretenden Rauchgases darüberliegenden Fliehkraftentstauber hin ist der Verdrängungskonus mit einem Strömungskörper versehen oder als solcher ausgebildet; d. h. der Verdrängungskonus ist an der gegenüberliegenden Fläche mit einem weiteren Konus versehen. Die Aufgabe dieses als Strömungskörper wirkenden Konus liegt in der Vermeidung schädlicher Rauchgasverwirbelungen hinter den Drallschaufeln.

Die hinter den Drallschaufeln an dem die Drallschaufeln umschließenden Rohrmantel aus dem Rauchgasstrom abgeschiedenen Staubpartikel fallen innen am Rohrmantel entlang in den darunterliegenden Bunker.

Das das Rauchgas zu den Drallschaufeln führende Rohr besitzt in der Strömungsführung durch T-förmige Ausbildung eine scharfwinkelige Rauchgasumlenkung. Mit dem einen Anschlußflansch ist das T-förmige Rohr an den Drallschaufeln befestigt, während der gegenüberliegende Anschlußflansch sich frei nach unten hin fortsetzt und der rechtwinkelig zur Mittelachse beider Anschlußflansche stehende 3. Anschlußflansch am umgebenden Rohrmantel des Entstaubers befestigt ist und die Eintrittsöffnung für das Rauchgas bildet. Aufgrund der scharfwinkeligen Umlenkung findet eine erste Abscheidung von Staubpartikeln aus dem Rauchgasstrom in der T-förmig ausgebildeten Zuführungsrohrleitung zu den Drallschaufeln statt. Die dort ausgeschiedenen Staubpartikel fallen durch den den Drallschaufeln gegenüberliegenden, nach unten gerichteten, offenen Flansch der T-förmig ausgebildeten Zuführungsleitung. Dieser Flansch setzt sich in einer Staubführungsleitung fort, die den Staub dem darunterliegenden Bunker zuführt und zugleich mit dazu beiträgt, daß das zugeführte Rauchgas nicht zum Bunker hin, sondern durch die Drallschaufeln entweicht.

Die erfindungsgemäße Entstaubungseinheit kann wahlweise allein oder in Vielzahl als Vielzellenentstauber verwendet werden.

In der Zeichnung ist ein Vielzellenentstauber als Ausführungsbeispiel der Erfindung dargestellt. Es zeigen:

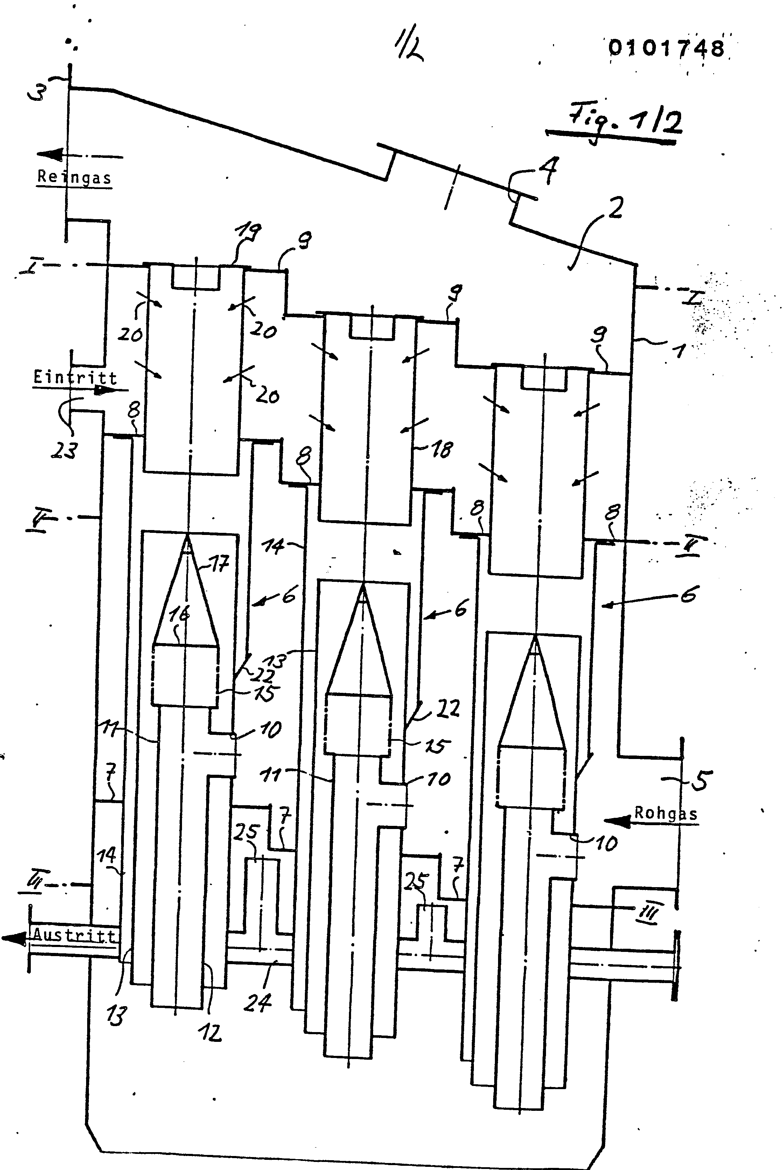

Fig. 1 eine schematische Gesamtansicht der erfindungsgemäßen Vorrichtung,

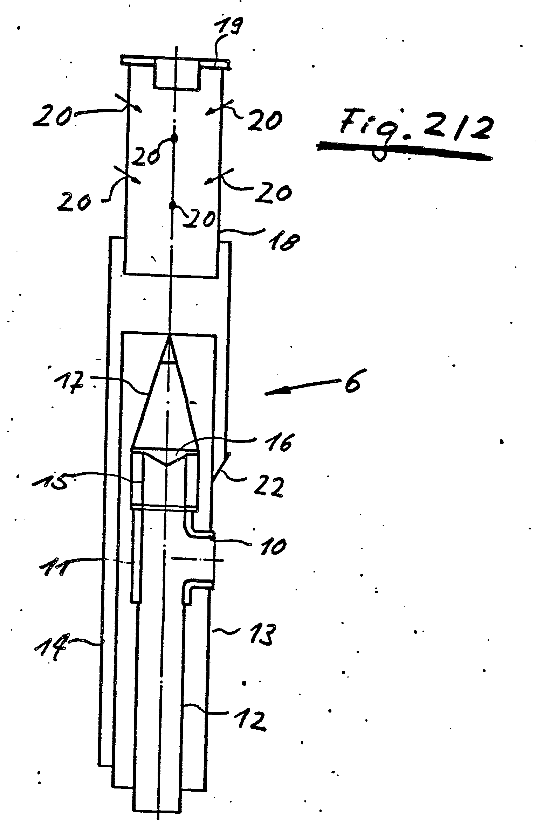

Fig. 2 eine erfindungsgemäße Entstaubungseinheit in vergrößerter Einzelansicht.

0101748

Mit 1 ist ein Gehäuse bezeichnet, das durch eine Blechplattenschweißkonstruktion gebildet wird. Das Gehäuse weist senkrecht stehende Seiten, Vorder- und Hinterwand auf. Es ist mehrteilig ausgebildet, wobei die Teilungslinien entlang der Linien I/I, II/II und III/III verlaufen. Die Teilungslinie I/I durchschneidet einen Gassammelraum 2, in dem sich gereinigtes Rauchgas sammelt, bevor es einem Kamin zugeführt wird. Die Austrittsöffnung des Gassammelraumes 2 für das Reingas ist mit 3 bezeichnet. Infolge des Verlaufes der Teilungslinie I/I ist der oberste Teil des Gassammelraumes 2 bzw. der diesen Gassammelraum bildenden Gehäusehaube abnehmbar. Das hat Montage- und Wartungsvorteile. Darüber hinaus ist der Gassammelraum durch ein Wartungsloch 4 zugänglich. Das Wartungsloch 4 ist mit einem lösbaren Deckel verschlossen.

Die zweite Teilungslinie II/II liegt am unteren Ende eines nachfolgend erläuterten Fliehkraftentstaubers und hat gleichfalls Montage- und Wartungsvorteile. Die 3. Teilungslinie III/III liegt im unteren Bereich der Entstaubungseinheit und hat die gleichen Wartungs- und Montagevorteile der übrigen Teilungslinien.

Die mit 5 bezeichnete Eintrittsöffnung des Gehäuses 1 für das aus einer nicht dargestellten Feuerungsanlage austretende Rohgas liegt wie bei den bekannten Vielzellenentstaubern nach der DT-OS 21 50 733 im unteren Bereich des Gehäuses 1. Die Eintrittsöffnung 5 besitzt einen Flansch, mit dem das Gehäuse 1 an die nicht dargestellte Feuerungsanlage angeflanscht ist. Die Feuerungsanlage ist im vorliegenden Fall für einen Dreizugkessel mit einer Leistung von 60.000 kcal/h ausgelegt.

Durch die Eintrittsöffnung 5 tritt das Rauchgas im Betriebsfall in einen von Rohreinheiten 6 durchzogenen, stufenförmig verlaufenden Gehäuseraum. Die Rohreinheiten 6 sind jeweils gleich ausgebildet und sind mit senkrecht verlaufender Längsachse im Gehäuse 1 angeordnet. Dabei weisen sie in Längsrichtung jeweils zueinander eine Verschiebung auf, die bei sonst gleichen Gehäuseanschlüssen den stufenförmigen Verlauf des Gehäuseraumes bewirkt. Die Gehäuseanschlüsse sind Bodenbleche 7, Mittelbleche 8 und Deckenbleche 9. Die Bodenbleche 7 ergänzen sich zu einem das Gehäuse 1 un-

ten vollständig verschließenden Boden, der die Rohreinheiten 6 schließend umgibt. Des gleichen ergänzen sich die Mittelbleche 8 zu einer das Gehäuse 1 vollständig unterteilenden Mittelwand, die die Rohreinheiten 6 schließend umgibt. Entsprechend ergänzen sich die Deckenbleche 9 zu einer einheitlichen Decke, die den Gehäuseraum oben zum Gassammelraum 2 hin verschließt und die Rohreinheiten 6 schließend umgibt. Im Mittel hat der stufenförmige Verlauf der Decke 9 entsprechend der in Längsrichtung unterschiedlichen Anordnung der Rohreinheiten 6 eine Neigung, mit der eine Neigung der das Gehäuse 1 oben verschließenden Wand korrespondiert, so daß der Gassammelraum überall einen annähernd gleichbleibenden Querschnitt aufweist.

Die in Längsrichtung jeweils versetzte Anordnung der Rohreinheiten 6 resultiert aus einer gewünschten, möglichst freien Anströmung eines Eintrittsflansches 10 einer jeden Rohreinheit 6 durch Rauchgas, das aus der Eintrittsöffnung 5 in das Gehäuse 1 strömt. Die Eintrittsflansche 10 besitzen einen sehr viel geringeren Durchmesser als die Eintrittsöffnung 5. Der freie Durchmesser der Eintrittsflansche 10 ist annähernd 1/3 des Durchmessers der Eintrittsöffnung 5. Dadurch lassen sich die Rohreinheiten 6 mit den Eintrittsflanschen 10 so anordnen, daß in horizontaler Projektion der Eintrittsöffnung 5 die freien Durchtrittsöffnungen der Eintrittsflansche 10 innerhalb der projizierten Durchtrittsöffnung 5 liegen, diese aber insgesamt voll ausfüllen.

Jede Rohreinheit 6 besteht aus Teilen 11 - 19. Auffallend sind dabei zwei miteinander fluchtende Rohrstücke 13 und 18. Die Rohrstücke 13 und 18 sind miteinander durch ein weiteres Rohr 14 und das zugehörige Mittelblech 8 verbunden. Während das Rohrstück 18 in dem Mittelblech 8 und dem Deckenblech 9 fest verschweißt ist, ist das Rohr 14 mittels eines Flansches mit dem Mittelblech 8 fest verschraubt. In dem Bodenblech 7 sitzt es jeweils verschiebbar. In dem Rohrstück 13 sitzt ein T-förmig ausgebildetes Rohrstück 11, das mit dem Anschlußflansch 10 fest in dem Rohrstück 13 verschweißt ist. An den freien Enden setzt sich das T-förmige Rohrstück 11 in senkrechter Richtung in einem aus einer Vielzahl gleichmäßig verteilt auf einem

Kreisumfang angeordneten Drallschaufeln bestehenden Drallkörper 15 und an dem gegenüberliegenden freien Ende nach unten in einem Staubführungsrohr

0101748

12 fort. Die Drallschaufeln des Drallkörpers 15 bestehen aus einfachen Blechen mit leichter Wölbung, die eine günstige Strömungsführung des Rauchgases durch gleichmäßig zunehmende Ablenkung in Umfangsrichtung bewirkt. Der Drallkörper 15 ist mit dem T-förmigen Rohrstück 11 verschweißt. An seinem oberen Ende besitzt er einen Verdrängungskonus 16, der in den Strömungsinnenraum des Drallkörpers 15 hineinragt und eine gleichmäßige Verteilung des anströmenden Rauchgases in vertikaler Richtung bewirkt. An den Verdrängungskonus 16 schließt sich ein Strömungskörper 17. Der Strömungskörper 17 soll eine nachteilige Wirbelbildung in dem zugehörenden Bereich des Rohrstückes 13 verhindern. Der Verdrängungskonus 16 und der Strömungskörper 17 sind mit dem Drallkörper 15 verschweißt.

Das Rohrstück 18 ist in einem Abstand über dem Rohrstück 13 angeordnet, dessen Maß zwischen dem halben und vollen Rohrdurchmesser liegt.

In ähnlichem Abstand befinden sich im Rohrstück 18 zwei einander diametral gegenüberliegend angeordnete Düsen 20. Senkrecht über diesen Düsen befinden sich im Abstand von 150 mm zwei weitere gleichermaßen angeordnete Düsen 20 in dem Rohrstück 18. Neben diesen Düsen gibt es vier weitere um 180° versetzt angeordnete Düsen, die gleichermaßen diametral gegenüberliegend und übereinander im gleichen Abstand angeordnet sind, jedoch zu den vorher erläuterten vier Düsen 20 in Rohrlängsrichtung einen Abstand von 75 mm aufweisen. Alle Düsen 20 sind nach unten geneigt mit einem Neigungswinkel von 30° angeordnet. Darüber hinaus verlaufen die Düsen in Umfangsrichtung, so daß die Drallbewegung eines sich im Uhrzeigersinn in Umfangsrichtung des Rohres 18 anströmenden Rauchgases durch einströmendes zusätzliches Gas verstärkt wird. Die Düsen haben einen Durchmesser von 7,5 mm.

Im Ausführungsbeispiel sind hinter den dargestellten drei Rohreinheiten 6 noch weitere drei Rohreinheiten 6 spiegelsymmetrisch angeordnet, so daß ein mechanischer Vielzellenentstauber mit sechs parallel geschalteten Einzelzellen bzw. Rohreinheiten 6 vorliegt. Die durch die Eintrittsflansche 10 in die Rohrstücke 11 eintretenden Rauchgase verlieren bei der Umleitung zu den Drallkörpern 15 hin bereits in den T-förmigen Rohrstücken 11 eine beträchtliche Anzahl von groben Staubpartikeln. Die Ursache ist der Aufprall der groben Staubpartikel auf der Rohrinnenwand bzw. eine beträchtliche Erhöhung der Staubkonzentration an der der Eintrittsöffnung des Eintrittsflansches gegenüberliegenden Rohrinnenwandfläche. Dort reicht dann die

Kraft des aufwärts strömenden Rauchgases nicht mehr aus, um einen Teil der Staubpartikel daran zu hindern, ihrer Schwerkraft folgend durch die Staubführungsrohre 12 in einen unter den Rohreinheiten 6 angeordneten Bunker 21 zu fallen.

Im Drallkörper 15 verteilen sich die Rauchgase gleichmäßig auf die einzelnen Drallschaufeln. Von diesen Drallschaufeln wird den Rauchgasen in Umfangsrichtung eine Bewegung aufgezwungen. Dabei verhält sich jede von zwei einander in Umfangsrichtung des Rohres gegenüberliegende Drallschaufeln verursachte Einzelströmung ähnlich wie die Rauchgasströmung eines Zyklonentstaubers. Aufgrund der auf die Staubpartikel wirkenden Fliehkraft der Drallbewegung tritt eine starke Staubkonzentration an der Innenwand und dicht an der Innenwand des Rohrstückes 13 auf, derzufolge die groben Staubpartikel zwischen den Rohren 11, 12 und 13 hindurch in den Bunker 21 fallen, während teilweise gereinigtes Gas nach oben hin entweicht.

Dieses Rauchgas tritt in das obere Rohrstück 18 und wird dort durch weiteres Gas, das durch die Düsen 20 zugeführt wird, in der Drehbewegung erheblich beschleunigt. Das führt zu verstärkten Fliehkräften und der weiteren Abscheidung von Staubpartikeln, von feineren Staubpartikeln aus dem Rauchgasstrom. Das Reingas verläßt die Rohre 18 der Rohreinheiten 6 durch Öffnungen in Deckeln 19. Dabei wird die Trennung des Reingases von dem Staubkonzentrat im Bereich der Innenwand der Rohrstücke 18 durch einen in die Rohrstücke 18 hineinreichenden Kragen der Deckel 19 begünstigt.

Die ausgeschiedenen Feinststaubpartikel fallen nach unten und werden zwischen den Rohrstücken 18 und 13 in den Ringraum zwischen den Rohren 13 und 14 ausgetragen. Dort fallen die Staubpartikel weiter in den Bunker 21. Der Ringraum der Rohre 14 ist im Bereich der Eintrittsflansche 10 ohne nachteilige Folgen auf den Staubtransport durch eine Anströmschräge 22 teilweise unterbrochen.

Die Entstaubung in den Rohren 18 wird noch wesentlich erhöht durch die Eindüsung von kälteren Gasen bzw. Luft. Die Luft wird durch einen Abschlußflansch 23 hindurch zugeführt und begleitet die in den Rohrstücken 18 abgeschiedenen Feinststaubpartikel zu einem wesentlichen Teil mit in den Bunker 21. Dort wird die Luft durch eine zwischen den Rohreinheiten 6 angeordnete Absaugleitung 24 mit Ansaugöffnungen 25 abgesaugt. Im Ausführungs-

beispiel wird die Luft als Trägerluft für die Eindüsung von Kohlenstaub in den Dreizugkessel verwendet. Das bewirkt eine vorteilhafte Luft- und Kohlenstaubvorwärmung. Die aus dem Bunker 21 abgesaugte Luft bildet dabei infolge Beimischung zu ohne Vorwärmung in dem Gehäuse 1 verwendeter Luft zu 30 % das Eindüsungs- bzw. Trägermittel. Für die Eindüsung und Beschickung der Entstaubungsanlage mit Luft ist ein einziger Kompressor ausreichend, dessen austretendes Gas teilweise mittelbar über das Gehäuse 1 und teilweise unmittelbar, jedoch unter vorheriger Vermischung mit dem aus dem Gehäuse 1 austretenden Gas in die Feuerungsanlage gelenkt wird.

Das gesamte Entstaubungssystem hat keine drehenden Teile. Der Verschleiß ist minimal. Die regelmäßigen Wartungsarbeiten bleiben auf das Entleeren des Bunkers 21 beschränkt.

Aufgrund der stufenförmigen Anordnung der Rohreinheiten 6 und der damit verbundenen freien Anströmung sowie entsprechender Rohrauslegung und Einhaltung günstiger Strömungsprofile treten nur relativ geringe Strömungswiderstände in der Entstaubungsanlage auf.

0101748

Patentansprüche

1. Entstaubung für Feuerungsanlagen, gekennzeichnet durch eine Fliehkraftentstaubung des Rauchgases mit Kaltgas und/oder Reingas, das tangential in den Rauchgasstrom eingedüst wird.

2. Entstaubung nach Anspruch 1, dadurch gekennzeichnet, daß das Rauchgas vor dem Zutritt des Kaltgases und/oder Reingases mechanisch in eine Drehbewegung versetzt wird.

3. Entstaubung nach Anspruch 1 oder 2, gekennzeichnet durch eine vorgeschaltete starkwinkelige Rauchgasumlenkung (11).

4. Entstaubung nach einem oder mehreren Ansprüche 1 - 3, dadurch gekennzeichnet, daß das zugeführte Kaltgas und/oder Reingas mit dem Staub dem Bunker (21) zugeführt wird, von dort abgesaugt und für die Eindüsung von Brennstoff in die Feuerungsanlage verwendet wird.

5. Entstaubung nach Anspruch 1, gekennzeichnet durch einen rohrförmigen Behälter (18) als Rauchgasführung mit einer Einschnürung (19) am oberen Ende und mindestens einer in Umfangsrichtung verlaufenden Eintrittsöffnung (20) zum Eindüsen von Kaltgas und/oder Reingas.

6. Entstaubung nach Anspruch 5, dadurch gekennzeichnet, daß im Rohr (18) in Strömungsrichtung des Rauchgases ein Rohr (13) als Rauchgasführungsrohr zugeordnet ist, das mittig mit einem Drallkörper (15) und einer Rauchgaszuführung (10, 11) zu dem Drallkörper (15) versehen ist.

7. Entstaubung nach Anspruch 5, dadurch gekennzeichnet, daß die Rohre (13, 18) im Abstand voneinander angeordnet sind und außen mit einer Staubführung (14) versehen sind.

Fig. 1/2

0101748

_Fig. 2/2_

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-3 199 268 (K.H. OEHLRICH) * Spalte 1, Zeile 12 - Spalte 2, Zeile 37; Spalte 6, Zeilen 39-72; Spalte 9, Zeilen 4-43; Abbildungen 1,2 * | 1,2,5 | B 01 D 45/12<br>F 23 J 3/04<br>B 04 C 7/00 |
| X | NL-A- 242 542 (SIEMENS-SCHUCKERTWERKE) * Spalte 4, Zeilen 37-53; Abbildungen 1a,1b,2 * | 1,2,5 | |
| X | FR-A-1 021 497 (AT. DE CONST. OERLIKON) * Insgesamt * | 1 | |
| X | US-A-2 404 347 (T.C. BIETH) * Insgesamt * | 1 | RECHERCHIERTE SACHGEBIETE (Int. Cl. ³) |
| Y | FR-A-2 406 158 (R. TABEL) * Seite 4, Zeile 13 - Seite 6, Zeile 20; Abbildung 2 * | 1,4 | B 01 D<br>F 23 J<br>B 04 C |

Der vorliegende Recherchenbericht wurde für alle Patentansprüche erstellt.

| Recherchenort DEN HAAG | Abschlußdatum der Recherche 06-04-1983 | Prüfer PYFFEROEN K. |
|---|---|---|